# EUROPÄISCHE PATENTSCHRIFT

(11) **EP 1 403 517 B1**
(45) Veröffentlichungstag und Bekanntmachung des Hinweises auf die Patenterteilung: **10.10.2007**
(21) Anmeldenummer: 03019106.8
(22) Anmeldetag: 23.08.2003
(51) Int. Cl.: F04B 39/10, F04B 53/10, F16K 17/04

(54) **Verwendung einer Ventilanordnung für eine Vakuumpumpe**
Use of a valve arrangement for a vacuum pump
Utilisation d'un ensemble de soupape pour pompe à vide

(30) Priorität: 25.09.2002 DE 10244526
(43) Veröffentlichungstag der Anmeldung: 31.03.2004
(73) Patentinhaber: Pfeiffer Vacuum GmbH, 35614 Asslar (DE)
(72) Erfinder: Bez, Eckhard, New Bern, NC 28562 (US); Zabescheck, Stefan, Dr., 35614 Asslar-Berghausen (DE)

(56) Entgegenhaltungen:
- DE-A- 19 634 518
- DE-A- 19 721 356
- DE-B- 1 112 359
- FR-A- 2 655 535
- US-A- 4 102 608
- US-A- 4 699 572

## Beschreibung

Die Erfindung betrifft die Verwendung eines ein- oder mehrteiligen Hohlkörpers in Verbindung mit einer Vakuumpumpe mit Ventilanordnung.

Vakuumpumpen der hier beschriebenen Art, bei welchen die Erfindung sinnvoll angewandt werden kann, zeichnen sich dadurch aus, dass sie im Schöpfraum trocken arbeiten. Damit ergibt sich auch die Forderung nach schmiermittelfreien Komponenten, wie z. B. Ventilen, die unmittelbar mit der Pumpe verbunden sind.

Insbesondere handelt es sich im Rahmen der Erfindung um Ventile, deren Verschlusselement, welches in der Regel als Ventilteller bezeichnet wird, in Durchflussrichtung bewegt wird. In geschlossenem Zustand sitzt der Ventilteller plan auf dem Ventilsitz auf. Für die Verwendung von Federelementen in Ventilen wurden unterschiedliche Lösungen vorgeschlagen wie z.B. in der US-A-4 699 572 gezeigt wird. Metallische Federn stoßen bei der Verwendung in trockenen Bauteilen auf Schwierigkeiten, insbesondere bei der Berührung mit ungeschmierten Oberflächen. Der Abrieb, der bei der Verwendung einer solchen Kombination entsteht, kann zu schwerwiegenden Funktionsstörungen des betreffenden Bauteils führen. Eine andere gebräuchliche Lösung besteht in der Verwendung von massiven O-Ringen für schmiermittelfreie Pumpen. Einer der Hauptgründe, warum solche O-Ringe keine gute Federwirkung aufweisen, ist, dass deren Material im Zentrum der Ringe sehr schwer verformbar ist und eine Verformung nur unter Einwirkung von großen Kräften auftritt. Dazu kommt, dass verformbare O-Ringe einen Querschnitt aufweisen, welcher durch zwei gegenüberliegende Flächen, verbunden mit Zylinderhalbschalen, bestimmt ist. Diese Tatsachen ergeben zusammen eine nicht lineare Federwirkung und einen äußerst geringen Verformungsspielraum. Eine weitere Lösung besteht in der Verwendung von metallischen Federelementen, welche mit einer elastischen Hülle umgeben sind. Die Herstellung solcher Bauteile ist aufwändig und teuer.

Im Stand der Technik werden verschiedene Lösungen für Ventile vorgeschlagen, bei denen elastische Materialien verwendet werden:

Aus der DE-A-197 21 356 ist bekannt, den Ventilteller eines Ventils mit einem Hohlraum zu versehen, in dem eine elastische Kapsel angeordnet ist. Diese steht zwingend mit einer Druckleitung in Verbindung, so dass auf hydraulischem und pneumatischem Weg das Ventil zwangsgesteuert geöffnet und geschlossen werden kann. Die Konstruktion weist schwierig zu formenden Teile und eine aufwändige Gestaltung auf. Eine Metallfeder, wie sie oben bereits erwähnt wurde, zeigt die US-A-4 699 572. Im Zylinderkopf ist ein Ventil angeordnet, welches über eine Metallfeder geschlossen gehalten wird.

Die FR-A-2 655 535 lehrt eine spezielle Form eines Ventils. Hierbei befindet sich ein kreisförmiger Schlauch mit einer ersten Flüssigkeit in einem Raum mit einer zweiten Flüssigkeit. Der Schlauch besitzt zwei Öffnung, wobei eine davon fixiert ist und mit der Versorgung der ersten Flüssigkeit in Verbindung steht. Die zweite Öffnung ruht auf einem Ventilsitz. Besteht eine ausreichend hohe Druckdifferenz zwischen der ersten und der zweiten Flüssigkeit, biegt sich der kreisförmig gekrümmte Schlauch auf und die zweite Öffnung entfernt sich vom Ventilsitz. Dieses Ventil wird in der Medizintechnik eingesetzt.

Die DE-A-111 23 359 schlägt vor, ein Ventil durch eine Membran zu erzeugen, welche ein Rohr verschließt. Gesteuert wird diese Membran durch einen hinter ihr angeordneten Druckbeutel.

Der Erfindung liegt die Aufgabe zu Grunde, eine Ventilanordnung für eine Vakuumpumpe vorzustellen, welche die oben genannten Nachteile nicht aufweist und vielfältig verwendbar ist.

Die Aufgabe wird durch die Merkmale des Anspruches 1 gelöst. die Ansprüche 2 - 6 stellen weitere Ausgestaltungsformen der Erfindung dar.

Der Vorteil der Verwendung eines Hohlkörpers aus elastomerem Material als Ventilfeder besteht zunächst darin, dass kein metallischer Abrieb entsteht. Die Form eines Hohlkörpers bewirkt eine wesentlich bessere Federwirkung als massive Ringe. Der Verformungsspielraum ist größer als der massiver Ringe, und es sind nicht so große Kräfte zur Verformung nötig. Hohlringe aus verschiedenen elastomeren Materialien mit unterschiedlichen elastischen Eigenschaften sind auf dem Markt erhältlich. Geometrische Abmaße, wie

Durchmesser, Wandstärke und Länge, können problemlos variiert werden, so dass Federkonstanten, wie Steifigkeit , ohne weiteres den Erfordernissen angepasst werden können. Wenn der Bereich der Federwirkung so eingeschränkt wird, dass der innere Durchmesser der Federringe nicht Null wird, tritt keine Ermüdung ein und die Lebensdauer ist nahezu unbegrenzt. Durch Vervielfachung der Windungen (konzentrische Ringe oder Spiralform) können die Kräfte noch wesentlich erhöht werden. Eine weitere Möglichkeit, die Kräfte zu variieren, besteht in der Verwendung von einzelnen Federelementen als Segment.

An Hand der Figuren 1 - 5 soll die Erfindung näher erläutert werden.
Fig. 1a - 1c zeigen Schnitte durch die erfindungsgemäße Anordnung mit verschiedenen Querschnitten.
Fig. 2 - 5 zeigen Draufsichten verschiedener Ausführungsformen.

Die Ventilanordnungen in den Fig. 1a - 1c bestehen im wesentlichen aus einem Ventilteller 1, einem Ventilsitz 4 und aus einer Ventilfeder 12. Die Bewegung des Ventiltellers 1 erfolgt senkrecht zur Durchflussrichtung (durch Pfeile markiert). In geschlossenem Zustand liegt er plan auf dem Ventilsitz 4 auf. Das Aufliegen wird durch die erfindungsgemäße Ventilfeder 12 bewirkt. Zur Abdichtung ist der Ventilteller 1 auf der dem Ventilsitz 4 zugewandten Seite mit einem planen Dichtelement 5 versehen. Dieses Dichtelement kann durch eine Beschichtung gebildet werden.

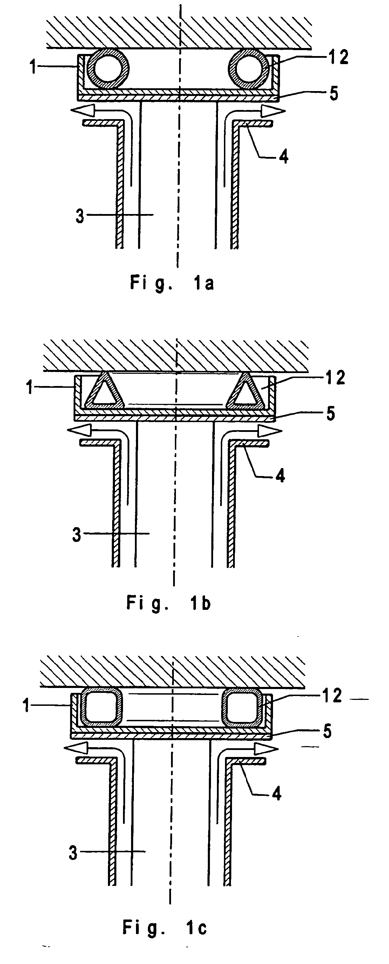

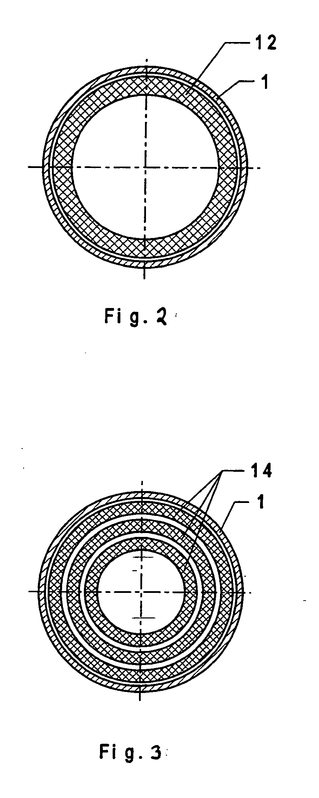

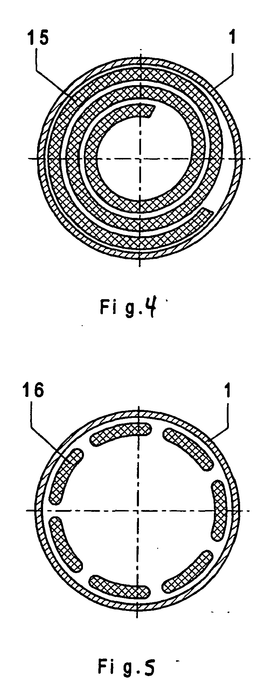

Erfindungsgemäß ist die Ventilfeder 12 als Hohlkörper ausgebildet. Dieser hat die Form eines Schlauches mit verschiedenen Querschnitten (Bsp. Fig. 1 a, 1 b, 1c). Weitere Ausführungsformen in Form von konzentrischen Ringen (Fig. 3), einer Spirale (Fig. 4) oder aus mehreren Segmenten bestehend (Fig. 5), sind möglich.

## Patentansprüche

1. Verwendung eines ein- oder mehrteiligen Hohlkörpers (12) aus elastomerem Material in Verbindung mit einer Vakuumpumpe mit Ventilanordnung, umfassend Ventilteller (1), Ventilsitz (4) und Ventilfeder, wobei der Ventilteller senkrecht zur Durchflussrichtung bewegt wird und im geschlossenen Zustand plan auf dem Ventilsitz aufliegt, und der eine oder mehrteilige Holkörper in der Form eines Schlauches ausgebildet ist, welches eine Federwirkung bewirkt.

2. Verwendung eines ein- oder mehrteiligen Hohlkörpers nach Anspruch 1, **dadurch gekennzeichnet, dass** der in der Form eines Schlauches ausgebildete ein- oder mehrteilige Hohlkörper (12) einen runden Querschnitt aufweist.

3. Verwendung eines ein- oder mehrteiligen Hohlkörpers nach Anspruch 1, **dadurch gekennzeichnet, dass** der in der Form eines Schlauches ausgebildete ein- oder mehrteilige Hohlkörper (12) einen vieleckigen Querschnitt aufweist.

4. Verwendung eines ein- oder mehrteiligen Hohlkörpers nach einem der Ansprüche 1 bis 3, **dadurch gekennzeichnet, dass** der in der Form eines Schlauches ausgebildete ein- oder mehrteilige Hohlkörper (12) aus mehreren konzentrischen Elementen (14) besteht.

5. Verwendung eines ein- oder mehrteiligen Hohlkörpers nach einem der Ansprüche 1 bis 3, **dadurch gekennzeichnet, dass** der in der Form eines Schlauches ausgebildete ein- oder mehrteilige Hohlkörper die Form einer Spirale (15) aufweist.

6. Verwendung eines ein- oder mehrteiligen Holkörpers nach einem der Ansprüche 1 bis 3, **dadurch gekennzeichnet, dass** der in der Form eines Schlauches ausgebildete ein- oder mehrteilige Hohlkörper aus mehreren Segmenten (16) besteht.

## Claims

1. Use of a one- or multi-part hollow body (12) of elastomeric material in conjunction with a vacuum pump with a valve arrangement, comprising a valve disc (1), a valve seat (4) and a valve spring, wherein the valve disc is moved perpendicularly to the direction of flow and in the closed state lies flatly on the valve seat, and the one- or multi-part hollow body is configured in the form of a flexible tube which gives rise to a spring action.

2. Use of a one- or multi-part hollow body according to Claim 1, **characterised in that** the one- or multi-part hollow body (12) in the form of a flexible tube has a round cross section.

3. Use of a one- or multi-part hollow body according to Claim 1, **characterised in that** the one- or multi-part hollow body (12) in the form of a flexible tube has a polygonal cross section.

4. Use of a one- or multi-part hollow body according to any one of Claims 1 to 3, **characterised in that** the one- or multi-part hollow body (12) in the form of a flexible tube consists of a plurality of concentric elements (14).

5. Use of a one- or multi-part hollow body according to any one of Claims 1 to 3, **characterised in that** the one- or multi-part hollow body in the form of a flexible tube has the shape of a spiral (15).

6. Use of a one- or multi-part hollow body according to any one of Claims 1 to 3, **characterised in that** the one- or multi-part hollow body in the form of a flexible tube consists of a plurality of segments (16).

## Revendications

1. Utilisation d'un corps creux (12) de matière élastomère, mono ou multibloc, en liaison avec une pompe à vide équipée d'un ensemble de soupape comprenant une tête (1), un siège (4) et un ressort (12), dans laquelle la tête de soupape se déplace perpendiculairement au sens du débit en reposant, à l'état fermé, sur le siège de soupape, et dans laquelle le corps creux mono ou multibloc est en forme de tuyau produisant un effet de ressort.

2. Utilisation d'un corps creux (12) mono ou multibloc selon la revendication 1, **caractérisée en ce que** ledit corps creux (12) mono ou multibloc en forme de tuyau présente une section transversale circulaire.

3. Utilisation d'un corps creux (12) mono ou multibloc selon la revendication 1, **caractérisée en ce que** ledit corps creux (12) mono ou multibloc en forme de tuyau présente une section transversale polygonale.

4. Utilisation d'un corps creux (12) mono ou multibloc selon l'une quelconque des revendications 1 à 3, **caractérisée en ce que** ledit corps creux (12) mono ou multibloc en forme de tuyau est constitué de plusieurs éléments concentriques (14).

5. Utilisation d'un corps creux (12) mono ou multibloc selon l'une quelconque des revendications 1 à 3, **caractérisée en ce que** ledit corps creux (12.) mono ou multibloc en forme de tuyau est configuré en spirale (15).

6. Utilisation d'un corps creux (12) mono ou multibloc selon l'une quelconque des revendications 1 à 3, **caractérisée en ce que** ledit corps creux (12) mono ou multibloc en forme de tuyau est constitué de plusieurs segments (16).
